# EUROPÄISCHE PATENTSCHRIFT

(11) **EP 3 027 910 B1**
(45) Veröffentlichungstag und Bekanntmachung des Hinweises auf die Patenterteilung: **13.11.2019**
(21) Anmeldenummer: 14718610.0
(22) Anmeldetag: 22.04.2014
(51) Int. Cl.: F04D 25/08, F04D 29/08, F04D 29/62, F04D 29/66, F04D 17/16

(54) **RADIALGEBLÄSE MIT KOMBINIERTER DICHTUNG UND SCHWINGUNGSENTKOPPLUNG**
CENTRIFUGAL FAN HAVING COMBINED SEALING AND VIBRATION ISOLATION
VENTILATEUR RADIAL ÉQUIPÉ D'UN JOINT D'ÉTANCHÉITÉ ET D'UN DÉCOUPLAGE VIS-À-VIS DES VIBRATIONS COMBINÉS

(30) Priorität: 02.08.2013 DE 102013108370; 29.08.2013 DE 102013109402
(43) Veröffentlichungstag der Anmeldung: 08.06.2016
(73) Patentinhaber: EBM-PAPST Landshut GmbH, 84030 Landshut (DE)
(72) Erfinder: KLINK, Hans-Joachim, 88453 Erolzheim (DE); SCHLOPAKOWSKI, Frank, 84034 Landshut (DE); KEBER, Martin, 84109 Wörth (DE); DEININGER, Martin, 84036 Kumhausen (DE)
(74) Vertreter: Staeger & Sperling Partnerschaftsgesellschaft mbB
(86) Internationale Anmeldenummer: PCT/EP2014/058089
(87) Internationale Veröffentlichungsnummer: WO 2015/014507

(56) Entgegenhaltungen:
- WO-A1-2010/145890
- DE-U1- 9 108 745
- JP-U- S59 114 500
- US-A- 2 680 559
- US-A- 5 786 647

## Beschreibung

Die Erfindung betrifft ein Radialgebläse mit einem Gebläsegehäuse mit seitlich angeordneter Durchtrittsöffnung für eine Antriebswelle, einem einseitig an dem Gebläsegehäuse angeordneten Elektromotor, der von einem Motorträger gehalten ist, wobei der Motorträger einen Abschnitt aufweist, der sich in die Durchtrittsöffnung erstreckt, und eine Dichtung vorgesehen ist, die an dem Motorträger und dem Gebläsegehäuse anliegt.

Die erfindungsgemäße Dichtung erfüllt drei Aufgaben, nämlich das Abdichten des Motorträgers gegenüber dem Gebläsegehäuse, die Schwingungsentkopplung des Elektromotors bzw. des Motorträgers gegenüber dem Gebläsegehäuse und das Befestigen des Motorträgers mit dem Elektromotor an dem Gebläsegehäuse.

Schwingungsdämpfende Aufnahmevorrichtungen für den Elektromotor zur Befestigung an einem Gebläsegehäuse sind aus dem Stand der Technik bekannt. Beispielsweise offenbart die DE 10 2011 013 685 A1 eine Aufnahmevorrichtung zur Aufnahme eines Motors an einer Gebläsegehäusewand mit mehreren elastischen Dämpfungselementen, die über an der Gehäusewand angeordneten Aufnahmevorrichtungen in Verbindung mit dem Motorträger stehen, wobei ihre jeweiligen axialen Mittelachsen in Richtung des Motors weisen, um eine Schwingungsentkopplung gegenüber dem Gebläserad zu erzielen.

Ferner ist es bekannt, die Antriebswelle des Elektromotors gegenüber Einflüssen von außen abzudichten, wobei die Wellendichtung gleichzeitig Aufnahme für eine Lagerung ist. Ein diesbezüglicher Stand der Technik ist beispielsweise die DE 10 2009 036 149 A1, in der eine Dichtungsanordnung offenbart ist, welche die Form eines Topfes aufweist, wobei ein Wellenlager in die Wellendichtungsanordnung eingesetzt ist.

Ein Radialgebläse gemäß dem Oberbegriff des Anspruchs 1 ist bekannt aus der JP S59-114500 U.

Die auf die Anmelderin zurückgehenden Lösungen gemäß dem Stand der Technik haben sich in der Praxis vielfach bewehrt. Jedoch ist es bei einer angewinkelten Schwingungsentkopplung gemäß der DE 10 2011 013 685 A1 nötig, zwischen dem Motorträger und der Gehäusewand einen vorbestimmten Abstand vorzusehen, um die elastischen Elemente in entsprechendem Winkel anordnen zu können. Dies führt zu einem erhöhten Bauraumbedarf in axialer Richtung der Antriebswelle. Ferner war die Anzahl der notwendigen Elemente zur Wellendichtung und Schwingungsentkopplung vergleichsweise hoch, denn es mussten neben der Wellendichtung mindestens drei elastische Elemente zur Schwingungsentkopplung bereitgestellt werden. Die Befestigung des Motorträgers an der Gebläsegehäusewand erfolgte im Stand der Technik über Schrauben, die als Zusatzbauteile ebenfalls Kosten erzeugen und eine vergleichsweise aufwendige Montage darstellen.

Vor diesem Hintergrund ist es Aufgabe der Erfindung, ein Radialgebläse bereitzustellen, dessen Abdichtung im Bereich des Eintritts der Antriebswelle des Elektromotors in das Gebläsegehäuse mit einer Schwingungsentkopplung des Elektromotors bzw. des Motorträgers mit Elektromotor kombiniert ist, um die Anzahl der Teile zu reduzieren und den Bauraum in axialer Richtung der Antriebswelle zu verringern.

Diese Aufgabe wird erfindungsgemäß durch die Merkmalskombination gemäß Patentanspruch 1 gelöst. Hierbei ist ein Radialgebläse mit einem Gebläsegehäuse mit seitlich angeordneter Durchtrittsöffnung für eine Antriebswelle, einem außenseitig an dem Gebläsegehäuse angeordneten Elektromotor, der von einem Motorträger gehalten ist, vorgesehen, wobei der Motorträger einen Abschnitt aufweist, der sich in die Durchtrittsöffnung erstreckt, und eine Dichtung vorgesehen ist, die an dem Motorträger und dem Gebläsegehäuse derart anliegt, dass ein Bereich der Durchtrittsöffnung zwischen dem Motorträger und dem Gebläsegehäuse abgedichtet ist, und der Motorträger im montierten Zustand in einem Axialbereich zwischen dem Motorträger und dem Gebläsegehäuse zumindest abschnittsweise auf der Dichtung aufliegt. Durch das Anliegen der Dichtung sowohl an dem Motorträger als auch an dem Gebläsegehäuse erfolgt die Abdichtung der Durchtrittsöffnung. Die Schwingungsentkopplung zwischen dem Elektromotor und dem im inneren des Gebläsegehäuses angeordneten Gebläserad erfolgt ebenfalls über die Dichtung und ihre Anordnung zwischen dem Motorträger und dem Gebläsegehäuse, wobei das Gebläsegehäuse im montierten Zustand des Radialgebläses über eine vorbestimmte Fläche auf der Dichtung aufliegt. Nachdem die Dichtung selbst als schwingungsentkoppelndes Element zwischen Motorträger und Gebläsegehäuse vorgesehen ist, sind zusätzliche in Umfangsrichtung beabstandet angeordnete elastische Schwingungsentkopplungselemente, wie sie im Stand der Technik verwendet wurden, überflüssig.

Erfindungsgemäß ist die Dichtung ausgebildet, einen Rand der Duchtrittsöffnung des Gebläsegehäuses zu umgreifen. Vorzugsweise weist die Dichtung hierfür einen zylindrischen, mehreckigen, insbesondere sechseckigen, oder elliptischen Abschnitt auf, der an seiner Außenfläche eine Nut vorsieht, in die der Rand der Durchtrittsöffnung eingreift. Die Dichtung liegt somit an dem Motorträger an zwei Flächen an, nämlich der radial außenseitigen Fläche des Abschnitts, der sich in die Durchtrittsöffnung erstreckt, und an dem sich radial auswärts erstreckenden, zu der Gehäusewand weisenden Abschnitt. Somit ergibt sich eine Stabilisierung des Motorträgers gegenüber der Gehäusewand über die beiden Flächen.

In einer vorteilhaften Ausführung wird der Motorträger mittels der Dichtung an dem Gebläsegehäuse befestigt. Dabei ist als günstige Lösung vorgesehen, dass der Abschnitt des Motorträgers, der sich in die Durchtrittsöffnung erstreckt, mit einem Befestigungsmittel an der Dichtung gehalten ist und somit den Motorträger mittelbar an dem Gebläsegehäuse fixiert. In einer ersten Ausführung ist ein solches Befestigungsmittel ein Sicherungsring, der den Abschnitt des Motorträgers, der sich in die Durchtrittsöffnung erstreckt, umgreift. Günstigerweise ist vorgesehen, an der radialen Außenfläche des Abschnitts des Motorträgers, der sich in die Durchtrittsöffnung erstreckt, eine Nut vorzusehen, in den der Sicherungsring eingreift. Somit ist auch die letztliche Montageposition des Motorträgers an dem Gebläsegehäuse über den Abstand der Nut zu der Dichtung festgelegt. Im montierten Zustand liegt der Sicherungsring an der Dichtung an und verspannt den Motorträger mittelbar an dem Gebläsegehäuse.

In einer alternativen Ausführung ist das Befestigungsmittel ein an dem Motorträger angeformter Hinterschnitt, im Detail ein an dem Abschnitt des Motorträgers, der sich in die Durchtrittsöffnung erstreckt, angeformter Hinterschnitt, der im montierten Zustand an der Dichtung anliegt und den Motorträger über die Dichtung mittelbar an dem Gebläsegehäuse befestigt bzw. verspannt. Zur Montage ist günstigerweise vorgesehen, dass der Abschnitt des Motorträgers, der sich in die Durchtrittsöffnung erstreckt, eine zylindrische, mehreckige, insbesondere sechseckige, oder elliptische Form aufweist und durch die ebenfalls zumindest abschnittsweise zylindrische beziehungsweise formschlüssige Dichtung gesteckt wird.

Die Schwingungsentkopplung erfolgt über die Dichtung selbst, wobei diese in dem Axialbereich zwischen dem Motorträger und dem Gebläsegehäuse hierfür eine axiale Höhe von mindestens 1 mm, vorzugsweise 1 - 5 mm, aufweist. Die radiale Länge der Dichtung in dem Axialbereich zum Motorträger und dem Gebläsegehäuse ist mindestens 2 mm, vorzugsweise 2 - 20 mm. Soweit die Dichtung keine einheitliche Form aufweist, beziehen sich die vorstehend genannten Werte auf die jeweiligen Maximalwerte. Gemessen wird die radiale Länge ausgehend von dem Anlagepunkt der Dichtung an dem Motorträger.

Ferner ist günstig, dass die Dichtung in dem Axialbereich zwischen dem Motorträger und dem Gebläsegehäuse, in dem der Motorträger auf der Dichtung aufliegt, eine zu dem Motorträger komplementäre Form aufweist. Beispielsweise kann vorgesehen sein, dass die zueinander weisenden Flächen zwischen Motorträger und Dichtung eine Verrastung bilden. Ferner können wellenförmige, rippenförmige oder noppenförmige Formen vorgesehen, oder an dem Motorträger Vorsprünge ausgebildet sein, die in entsprechende Aussparungen der Oberfläche der Dichtung bzw. des Motorträgers hinein ragen. Hierdurch ist eine weitere Fixierung des Motorträgers an der Dichtung ermöglicht, wobei beispielsweise auch eine Montageposition des Motorträgers festlegbar ist.

In einer weiteren Ausführung ist vorgesehen, dass das Gebläsegehäuse an der Durchtrittsöffnung einen Sockel aufweist, dessen zur Durchtrittsöffnung weisender Sockelrand den Rand der Durchtrittsöffnung bildet. Der Sockel dient dazu, den für die Dichtung nutzbaren Bereich zwischen Motorträger und in dem Gebläsegehäuse angeordneten Gebläserad zu vergrößern. Im Übrigen sind die oben ausgeführten Merkmale zu dem Rand der Durchtrittsöffnung des Gebläsegehäuses auch auf den Sockelrand anwendbar. Durch die Nutzung eines Sockels wird zwischen dem Motorträger und dem Sockel ein Bereich bereitgestellt, der abschnittsweise oder vollständig von der Dichtung überdeckt werden kann.

Die verwendete Dichtung ist vorzugsweise aus elastomeren Material, z.B. Silikon-Kautschuk und weist eine Härte von 20-60 Shore A auf.

Als günstige Ausführung ist in einer Variante vorgesehen, dass Gebläsegehäuse oder zumindest dessen Seitendeckel sowie den Motorträger aus Kunststoff zu fertigen. Die beiden Bauteile können dann ins Werkzeug eingelegt und die Dichtung an die gewünschte Position angespritzt werden. Alternativ ist ferner möglich, den Seitendeckel aus Metall zu fertigen, die Dichtung an den Kunststoff-Motorträger anzuspritzen und den Motorträger mit angespritzter Dichtung an dem Seitendeckel zu befestigen.

Sämtliche oben genannten Merkmale sind in allen Varianten kombinierbar, soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine seitliche Schnittansicht eines erfindungsgemäßen Radialgebläses mit seitlichem Motoraufbau;
- Fig. 2: eine seitliche Schnittansicht von zwei Ausführungsformen der erfindungsgemäßen Anordnung der Dichtung;
- Fig. 3: zwei alternative weitere Ausführungsformen der erfindungsgemäßen Anordnung der Dichtung;
- Fig. 4: eine Ausführung der Dichtung;
- Fig. 5: eine weitere Ausführung der Dichtung,
- Fig. 6: eine weitere Ausführung der Dichtung, und
- Fig. 7: eine weitere Ausführung der Dichtung.

Die Figuren sind beispielhaft schematisch. Gleiche Bezugszeichen benennen gleiche Teile in allen Ansichten.

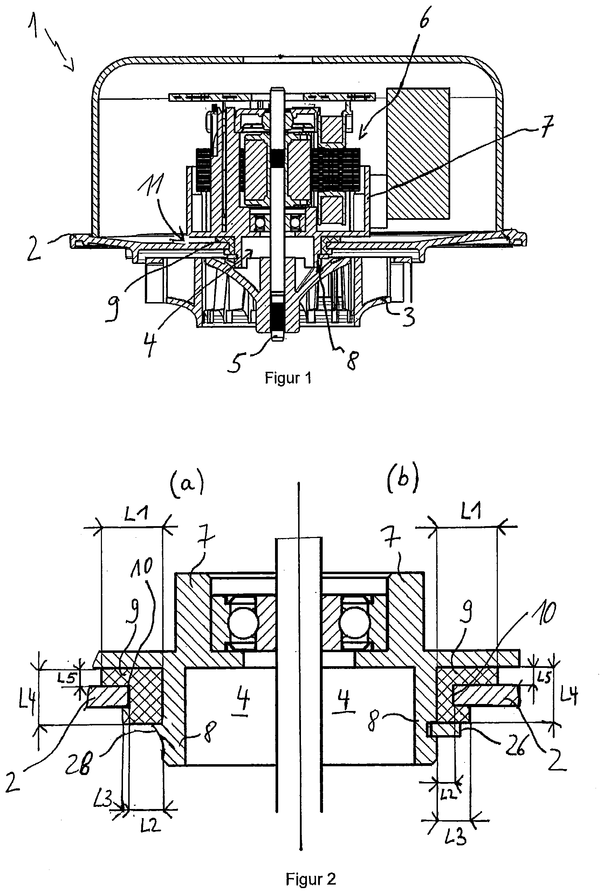

Fig. 1 zeigt das Radialgebläse 1 mit einem Gebläsegehäuse 2, von dem nur der Seitendeckel dargestellt ist, die übrigen Teile des Gebläsegehäuses, welche das Gebläserad 3 umgeben, sind nicht gezeigt. Das Gebläsegehäuse 2 weist eine seitlich angeordnete Durchtrittsöffnung 4 für eine Antriebswelle 5 eines Elektromotors 6 auf. Der Elektromotor 6 ist auf einem Motorträger 7 befestigt und weist einen Abschnitt 8 auf, der sich in die Durchtrittsöffnung 4 und in das Innere des Gebläsegehäuses 2 hinein erstreckt. Zwischen dem Gebläsegehäuse 2 und dem Motorträger 7 ist eine Dichtung 9 derart angeordnet, dass der Bereich der Durchtrittsöffnung 4 zwischen dem Motorträger 7 und dem Gebläsegehäuse 2 abgedichtet ist. Ferner liegt der Motorträger 7 im montierten Zustand gemäß Fig. 1 in dem Axialbereich 11 zwischen dem Motorträger 7 und dem Gebläsegehäuse 2 entlang seiner der Gebläsegehäusewand zuweisenden Fläche auf der Dichtung 9 auf.

Fig. 2 zeigt die Anordnung des Motorträgers 7 an dem Gebläsegehäuse 2 in zwei alternativen Ausführungsvarianten (a) und (b). In der Ausführung (a) ist der Motorträger 7 durch die zylindrische Dichtung 9 hindurch gesteckt und über einen an dem Motorträger 7 angeformten Hinterschnitt 28 an der Dichtung 9 fixiert. Der Motorträger 7 ist somit über die Dichtung 9 an dem Gebläsegehäuse 2 befestigt und verspannt, so dass die Dichtung 9 neben der Dichtfunktion die Funktion der Schwingungsentkopplung zwischen dem Aufbau Motorträger 7 mit Elektromotor 6 zu dem Gebläsegehäuse 2 erfüllt. Der Hinterschnitt 28 ist an dem Abschnitt 8 des Motorträgers 7 ausgebildet, der sich durch die Durchtrittsöffnung 4 in das Innere des Gebläsegehäuses 2 hinein erstreckt. Die Dichtung 9 umgreift den Rand 10 des die Durchtrittsöffnung 4 bildenden Gebläsegehäuses 2. Die Ausmaße der Dichtung 9 sind so gewählt, dass die Dicht- und Schwingungsentkopplungsfunktion sicher gewährleistet ist. Hierzu weist die Dichtung in dem Axialbereich 11 zwischen dem Motorträger 7 und dem Gebläsegehäuse 2 eine axiale Höhe von größer 2 mm auf. In der gezeigten Ausführung ist die Dichtung 9 umlaufend rund ausgebildet und weist in dem Axialbereich 11 zwischen dem Motorträger 7 und dem Gebläsegehäuse 2 eine radiale Länge L1 von 8 mm auf. Je breiter die radiale Erstreckung der Dichtung ist, desto größer ist die Auflagefläche und somit die Dämpfung und Stabilität des Motorträgers 7. Die radiale Erstreckung L2 der Dichtung 9 entspricht im Wesentlichen derjenigen der Gesamthöhe L4 und liegt jeweils in einem Bereich von 1 - 8 mm. In der gezeigten Ausführung gilt L1>L4, L2>L5, L3<L1 und L4>L2. Auch möglich wäre eine Ausbildung L1≥L4, L2≥L5, L3≤L1 und L4≥L2. Die zueinander weisenden Flächen der Dichtung 9 und des Motorträgers 7 weisen eine komplementäre Form auf. In der gezeigten Ausführung ist diese eben.

Die alternative Ausführung gemäß Fig. 2 gezeigt unter (b) stimmt mit den Merkmalen aus (a) im Wesentlichen überein. Die Ausführung unterscheidet sich bezüglich der Fixierung des Motorträgers 7 an der Dichtung 9, da in Ausführung (b) ein Sicherungsring 26 zur Arretierung des Motorträgers 7 an der Dichtung 9 eingesetzt wird. Hierfür weist der Motorträger 7 eine umlaufende Nut auf, in die der Sicherungsring 26 eingreift. Die Dichtung 9 umgreift ebenfalls den Rand 10 des Gebläsegehäuses 2, wobei die Abmaße der Dichtung folgendermaßen sind, L1≥L4, L2≤L5, L3<L1 und L4>L2.

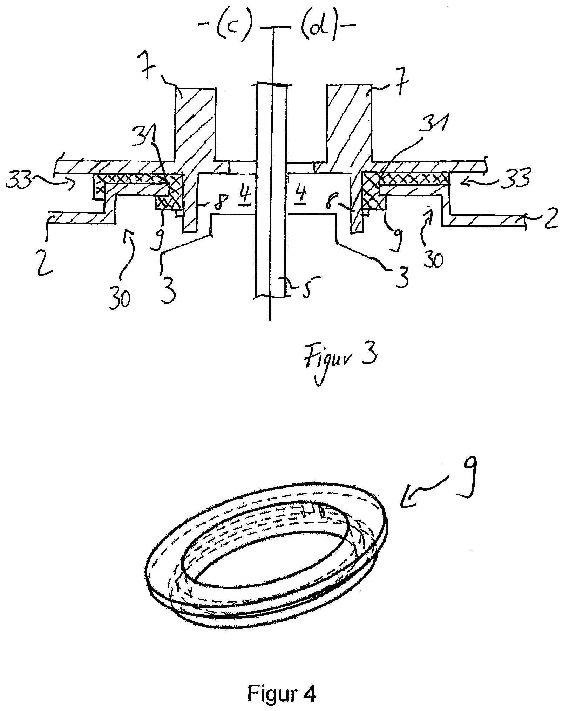

In Fig. 3 sind weitere Ausführungen der Anordnung der Dichtung 9 schematisch dargestellt. In beiden Ausführungen (c) und (d) ist an dem Gebläsegehäuse 2 an der Durchtrittsöffnung 4 ein Sockel 30 gebildet, dessen zur Durchtrittsöffnung 4 weisender Sockelrand 31 den Rand der Durchtrittsöffnung 4 bildet. Die Dichtung 9 umgreift in beiden Ausführungen den Sockelrand 31. In Ausführung (c) erstreckt sich die Dichtung 9 über die gesamte Fläche 33 des Sockels 30, wobei der radial außen liegende Sockelrand von der Dichtung 9 übergriffen wird. Bei der Ausführung (d) endet die Dichtung 9 radial außenseitig mit dem radial außen liegenden Sockelrand und schließt bündig zu diesem ab. Die Längenmaße sind nicht explizit eingezeichnet, jedoch sind die Kennzeichnungen aus Fig. 2 auch in Fig. 3 anwendbar. In Ausführung (c) und (d) sind die Maß wie folgt: L1>L4, L2≥L5, L3<L1 und L4>L2.

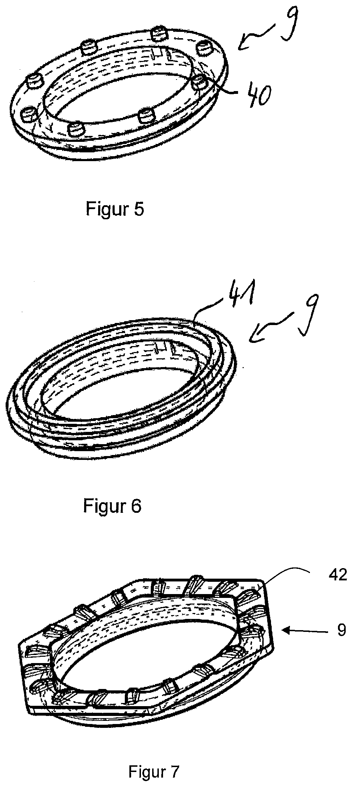

In den Fig. 4 bis 7 sind weitere Ausführungsformen der Dichtung 9 perspektivisch dargestellt. Fig. 4 zeigt die Dichtung in flächiger Ausführung, wie sie in den Fig. 1, 2 und 3 eingesetzt ist. Die Fig. 5 und 6 zeigen Oberflächen der Dichtung 9 mit Noppen 40 oder einer Nut 41, die in entsprechende Ausnehmungen in dem Motorträger 7 eingreifen können. In Fig. 7 ist die Dichtung 9 mit daran ausgebildeten Rippen 42. Alternativ kann der Motorträger 7 auch in einer Ausführung gemäß Fig. 2 flächig ausgebildet sein, um auf den Noppen 40, der Nut 41 oder den Rippen 42 aufzuliegen.

Die Dichtung in allen Ausführungsformen weist eine Härte von 20 - 60 Shore A auf, insbesondere 20 - 50 Shore A. Die Dichtung ist aus elastomerem Material, vorzugsweise aus Silikonkautschuk, NBR oder FKM.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann die zu dem Gebläsegehäuse weisende Fläche des Motorträgers eine Verrastung aufweisen, welche in eine komplementäre Fläche der Dichtung greift. Der Schutzumfang der Erfindung wird durch die nachfolgenden Ansprüche definiert.

## Patentansprüche

1. Radialgebläse mit einem Gebläsegehäuse (2) mit seitlich angeordneter Durchtrittsöffnung (4) für eine Antriebswelle (5), einem außenseitig an dem Gebläsegehäuse (2) angeordneten Elektromotor (6), der von einem Motorträger (7) gehalten ist, wobei der Motorträger (7) einen Abschnitt (8) aufweist, der sich in die Durchtrittsöffnung (4) erstreckt, und eine Dichtung (9) vorgesehen ist, die an dem Motorträger (7) und dem Gebläsegehäuse (2) derart anliegt, dass
a. ein Bereich der Durchtrittsöffnung (4) zwischen dem Motorträger (7) und dem Gebläsegehäuse (2) abgedichtet ist; und
b. der Motorträger (7) im montierten Zustand in einem Axialbereich (11) zwischen dem Motorträger (7) und dem Gebläsegehäuse (2) zumindest abschnittsweise auf der Dichtung (9) aufliegt, **dadurch gekennzeichnet, dass**
c. die Dichtung (9) einen Rand (10) der Durchtrittsöffnung (4) des Gebläsegehäuses (2) umgreift.

2. Radialgebläse nach Anspruch 1, **dadurch gekennzeichnet, dass** die Dichtung (9) schwingungsentkoppelnd zwischen Motorträger (7) und Gebläsegehäuse (2) wirkt.

3. Radialgebläse nach zumindest einem der vorigen Ansprüche, **dadurch gekennzeichnet, dass** der Abschnitt (8) des Motorträgers(7), der sich in die Durchtrittsöffnung (4) erstreckt, mit einem Befestigungsmittel an der Dichtung (9) gehalten ist und somit den Motorträger (7) mittelbar an dem Gebläsegehäuse (2) befestigt.

4. Radialgebläse nach Anspruch 3, **dadurch gekennzeichnet, dass** das Befestigungsmittel ein den Abschnitt (8) des Motorträgers(7), der sich in die Durchtrittsöffnung (4) erstreckt, umgreifender Sicherungsring (26) ist.

5. Radialgebläse nach Anspruch 3, **dadurch gekennzeichnet, dass** das Befestigungsmittel ein an dem Abschnitt (8) des Motorträgers (7), der sich in die Durchtrittsöffnung (4) erstreckt, angeformter Hinterschnitt (28) ist.

6. Radialgebläse nach zumindest einem der vorigen Ansprüche, **dadurch gekennzeichnet, dass** der Abschnitt (8) des Motorträgers(7), der sich in die Durchtrittsöffnung (4) erstreckt, durch die Dichtung (9) gesteckt ist.

7. Radialgebläse nach zumindest einem der vorigen Ansprüche, **dadurch gekennzeichnet, dass** der Motorträger (7) an dem Gebläsegehäuse (2) vorgespannt fixiert ist, wobei die Vorspannung durch eine elastische Eigenschaft der Dichtung (9) erzielt ist.

8. Radialgebläse nach zumindest einem der vorigen Ansprüche, **dadurch gekennzeichnet, dass** die Dichtung (9) in dem Axialbereich (11) zwischen dem Motorträger (7) und dem Gebläsegehäuse (2) eine axiale Höhe (L5) von mindestens 1mm aufweist.

9. Radialgebläse nach zumindest einem der vorigen Ansprüche, **dadurch gekennzeichnet, dass** die Dichtung (9) umlaufend ausgebildet ist und in dem Axialbereich (11) zwischen dem Motorträger (7) und dem Gebläsegehäuse (2) eine radiale Länge (L1) von mindestens 2mm aufweist.

10. Radialgebläse nach zumindest einem der vorigen Ansprüche, **dadurch gekennzeichnet, dass** die Dichtung (9) eine axiale Gesamtlänge (L4) von mindestens 3mm aufweist.

11. Radialgebläse nach zumindest einem der vorigen Ansprüche, **dadurch gekennzeichnet, dass** die Dichtung (9) in dem Axialbereich (11) zwischen dem Motorträger (7) und dem Gebläsegehäuse (2), in dem der Motorträger (7) auf der Dichtung (9) aufliegt, eine zu dem Motorträger (7) komplementäre Form aufweist.

12. Radialgebläse nach zumindest einem der vorigen Ansprüche, **dadurch gekennzeichnet, dass** Gebläsegehäuse (2) an der Durchtrittsöffnung (4) einen Sockel (30) aufweist, dessen zur Durchtrittsöffnung weisender Sockelrand (31) den Rand der Durchtrittsöffnung (4) bildet.

13. Radialgebläse nach zumindest dem vorigen Anspruch, **dadurch gekennzeichnet, dass** die Dichtung (9) eine zu dem Motorträger (7) weisende Fläche (33) des Sockels (30) des Gebläsegehäuses (2) zumindest abschnittsweise oder vollständig überdeckt.

14. Radialgebläse nach zumindest einem der vorigen Ansprüche, **dadurch gekennzeichnet, dass** die Dichtung (9) aus elastomerem Material gebildet ist und eine Härte von 20-60 Shore A aufweist.

## Claims

1. Centrifugal fan having a fan housing (2) having a laterally disposed passage opening (4) for a drive shaft (5), an electric motor (6) disposed on the outside of said fan housing (2) and held by a motor support (7), wherein said motor support (7) having a section (8) extending into said passage opening (4), and a seal (9) is provided bearing against said motor support (7) and said fan housing (2) such that
a. a region of the passage opening (4) between said motor support (7) and said fan housing (2) is sealed; and
b. in the mounted state, said motor support (7) rests in an axial region (11) between said motor support (7) and said fan housing (2) at least in sections on said seal (9), **characterized in that**
c. said seal (9) encompasses an edge (10) of said passage opening (4) of said fan housing (2).

2. Centrifugal fan according to claim 1, **characterized in that** said seal (9) acts vibration-decoupling between motor support (7) and fan housing (2).

3. Centrifugal fan according to at least one of the preceding claims, **characterized in that** said section (8) of said motor support (7), extending into said passage opening (4), is held on said seal (9) by a fastening means and thus fastens said motor support (7) indirectly to said fan housing (2).

4. Centrifugal fan according to claim 3, **characterized in that** said fastening means is a circlip (26) encompassing said section (8) of said motor support (7) extending into said passage opening (4).

5. Centrifugal fan according to claim 3, **characterized in that** said fastening means is an undercut (28) moulded onto said section (8) of said motor support (7) extending into said passage opening (4).

6. Centrifugal fan according to at least one of the preceding claims, **characterized in that** said section (8) of said motor support (7) extending into said passage opening (4) is inserted through said seal (9).

7. Centrifugal fan according to at least one of the preceding claims, **characterized in that** said motor support (7) is prestressed fixed to said fan housing (2), wherein said prestress is obtained by an elastic feature of said seal (9).

8. Centrifugal fan according to at least one of the preceding claims, **characterized in that** said seal (9) has an axial height (L5) of at least 1 mm in said axial region (11) between said motor support (7) and said fan housing (2).

9. Centrifugal fan according to at least one of the preceding claims, **characterized in that** said seal (9) is formed circumferentially and has a radial length (L1) of at least 2 mm in said axial region (11) between said motor support (7) and said fan housing (2).

10. Centrifugal fan according to at least one of the preceding claims, **characterized in that** said seal (9) has a total axial length (L4) of at least 3mm.

11. Centrifugal fan according to at least one of the preceding claims, **characterized in that** said seal (9) has a complementary shape to said motor support (7) in said axial region (11) between said motor support (7) and said fan housing (2) in which said motor support (7) rests on said seal (9).

12. Centrifugal fan according to at least one of the preceding claims, **characterized in that** said fan housing (2) has a base (30) at said passage opening (4), whose base edge (31) facing said passage opening forms said edge of said passage opening (4).

13. Centrifugal fan according to at least the preceding claim, **characterized in that** said seal (9) at least partially or completely covers an area (33) of said base (30) of said fan housing (2), facing said motor support (7).

14. Centrifugal fan according to at least one of the preceding claims, **characterized in that** said seal (9) is formed of elastomeric material and has a hardness of 20-60 Shore A.

## Revendications

1. Ventilateur radial avec un boîtier de ventilateur (2) avec ouverture de passage (4) agencée latéralement pour un arbre d'entraînement (5), un moteur électrique (6) agencé côté extérieur au niveau du boîtier de ventilateur (2), qui est retenu par un support de moteur (7), dans lequel le support de moteur (7) présente une section (8), qui s'étend dans l'ouverture de passage (4) et un joint d'étanchéité (9) est prévu, qui s'appuie sur le support de moteur (7) et le boîtier de ventilateur (2) de telle sorte que
a. une zone de l'ouverture de passage (4) est étanchéifiée entre le support de moteur (7) et le boîtier de ventilateur (2), et
b. le support de moteur (7) s'applique à l'état monté dans une zone axiale (11) entre le support de moteur (7) et le boîtier de ventilateur (2) au moins par section sur le joint d'étanchéité (9), **caractérisé en ce que**
c. le joint d'étanchéité (9) entoure un bord (10) de l'ouverture de passage (4) du boîtier de ventilateur (2).

2. Ventilateur radial selon la revendication 1, **caractérisé en ce que** le joint d'étanchéité (9) agit par découplage des vibrations entre le support de moteur (7) et le boîtier de ventilateur (2).

3. Ventilateur radial selon au moins l'une quelconque des revendications précédentes, **caractérisé en ce que** la section (8) du support de moteur (7), qui s'étend dans l'ouverture de passage (4), est retenue avec un moyen de fixation au niveau du joint d'étanchéité (9) et fixe ainsi le support de moteur (7) indirectement au niveau du boîtier de ventilateur (2).

4. Ventilateur radial selon la revendication 3, **caractérisé en ce que** le moyen de fixation est une bague de blocage (26) entourant la section (8) du support de moteur (7), qui s'étend dans l'ouverture de passage (4).

5. Ventilateur radial selon la revendication 3, **caractérisé en ce que** le moyen de fixation est une contre-dépouille (28) formée au niveau de la section (8) du support de moteur (7), qui s'étend dans l'ouverture de passage (4).

6. Ventilateur radial selon au moins l'une quelconque des revendications précédentes, **caractérisé en ce que** la section (8) du support de moteur (7), qui s'étend dans l'ouverture de passage (4), est enfichée par le joint d'étanchéité (9).

7. Ventilateur radial selon au moins l'une quelconque des revendications précédentes, **caractérisé en ce que** le support de moteur (7) est fixé précontraint au niveau du boîtier de ventilateur (2), dans lequel la précontrainte est obtenue par une propriété élastique du joint d'étanchéité (9).

8. Ventilateur radial selon au moins l'une quelconque des revendications précédentes, **caractérisé en ce que** le joint d'étanchéité (9) présente dans la zone axiale (11) entre le support de moteur (7) et le boîtier de ventilateur (2) une hauteur axiale (L5) d'au moins 1 mm.

9. Ventilateur radial selon au moins l'une quelconque des revendications précédentes, **caractérisé en ce que** le joint d'étanchéité (9) est réalisé de façon périphérique et présente dans la zone axiale (11) entre le support de moteur (7) et le boîtier de ventilateur (2) une longueur radiale (L1) d'au moins 2 mm.

10. Ventilateur radial selon au moins l'une quelconque des revendications précédentes, **caractérisé en ce que** le joint d'étanchéité (9) présente une longueur totale axiale (L4) d'au moins 3 mm.

11. Ventilateur radial selon au moins l'une quelconque des revendications précédentes, **caractérisé en ce que** le joint d'étanchéité (9) présente dans la zone axiale (11) entre le support de moteur (7) et le boîtier de ventilateur (2), dans lequel le support de moteur (7) repose sur le joint d'étanchéité (9), une forme complémentaire au support de moteur (7).

12. Ventilateur radial selon au moins l'une quelconque des revendications précédentes, **caractérisé en ce que** le boîtier de ventilateur (2) présente au niveau de l'ouverture de passage (4) un socle (30), dont le bord de socle (31) dirigé vers l'ouverture de passage forme le bord de l'ouverture de passage (4).

13. Ventilateur radial selon au moins la revendication précédente, **caractérisé en ce que** le joint d'étanchéité (9) recouvre au moins par section ou entièrement une surface (33) du socle (30) du boîtier de ventilateur (2) dirigée vers le support de moteur (7).

14. Ventilateur radial selon au moins l'une quelconque des revendications précédentes, **caractérisé en ce que** le joint d'étanchéité (9) est formé en matériau élastomère et présente une dureté de 20-60 Shore A.
